# EUROPÄISCHE PATENTSCHRIFT

(11) **EP 0 405 098 B1**
(45) Veröffentlichungstag und Bekanntmachung des Hinweises auf die Patenterteilung: **07.07.1993**
(21) Anmeldenummer: 90108759.3
(22) Anmeldetag: 10.05.1990
(51) Int. Cl.: G01N 21/45, G01B 9/02

(54) **Laserinterferometer-Refraktometer**
Laser interferometer-refractometer
Interféromètre-réfractomètre à faisceau laser

(30) Priorität: 14.06.1989 DE 8907250 U
(43) Veröffentlichungstag der Anmeldung: 02.01.1991
(73) Patentinhaber: Dr. Johannes Heidenhain GmbH, D-83292 Traunreut (DE)
(72) Erfinder: Dangschat, Holmer, Dipl.-Ing., D-8225 Traunreut (DE)

(56) Entgegenhaltungen:
- DE-A- 3 037 567
- DE-A- 3 616 245
- DE-C- 3 527 579
- DE-U- 8 907 250
- JOURNAL OF PHYSICS E/SCIENTIFIC INSTRUMENTS, Band 21, Nr. 7, Juli 1988, Seiten 690-692, Bristol, GB, K.P.BIRCH et al.: "Optical path length changes induced in cell windows and solid etalons by evacuation"
- TECHNISCHES MESSEN T.M., Band 52, Nr. 6, Juni 1985, Seiten 225-232, München, DE; H.-H.SCHUESSLER: "Laserinterferometrische Längenmesstechnik"
- MESSEN UND UEBERWACHEN, April 1989, Seiten 4-14, Stuttgart, DE; H.-H. SCHUESSLER: "Neue Möglichkeiten des Laser-Einsatzes in der industriellen Messtechnik"

## Beschreibung

Die Erfindung betrifft ein Laserinterferometer-Refraktometer gemäß dem Oberbegriff des Anspruchs 1.

Laserinterferometer werden in der Meßtechnik eingesetzt, um Größen, wie Längen, Winkel oder Geschwindigkeiten usw. zu erfassen. Insbesondere erfolgt ihr Einsatz bei Werkzeugmaschinen und Koordinatenmeßmaschinen. Ein entscheidendes Kriterium für die Genauigkeit eines Laserinterferometers ist die Berücksichtigung der Brechzahl der umgebenden Luft.

Vorrichtungen mit denen die Brechzahl ermittelt werden kann, nennt man Refraktometer. Laserinterferometer-Refraktometer sind Vorrichtungen, bei denen die Brechzahl der Luft interferometrisch gemessen wird. Dabei wird die Differenz der optischen Weglänge bei gleichen geometrischen Längen zwischen Luft und Vakuum in einer Vakuumkammer gemessen. Das Ergebnis der Brechzahlbestimmung wird bei der eigentlichen Messung einer Größe berücksichtigt.

Ein Laserinterferometer-Refraktometer ist bereits aus der DE-OS 30 37 567 bekannt. Dort ist ein Strahlteiler vorgesehen, der einen Laserstrahl in einen Referenz- und Meßstrahl aufspaltet. Eine Teilstrecke des Maßstrahles ist von einer Röhre umgeben, die durch beidseitig befestigte optische Begrenzungselemente in Form von Glasplatten abgeschlossen ist. Die Röhre mit den Glasplatten bildet die Vakuumkammer und bestimmt die geometrische Länge bzw. die Wegstrecke des Meßstrahls im Vakuum. Dieses bekannte Laserinterferometer-Refraktometer hat den Nachteil, daß beim Evakuieren der Vakuumkammer diese Wegstrecke vom äußeren Luftdruck beeinflußt wird, weil die beiden Glasplatten zur Begrenzung der evakuierten Wegstrecke unmittelbar der Umgebungsluft ausgesetzt sind.

Der Erfindung liegt die Aufgabe zugrunde, ein Laserinterferometer - Refraktometer zu schaffen, bei dem die evakuierbare Wegstrecke des Meßstrahls vom äußeren Luftdruck unabhängig ist.

Diese Aufgabe wird durch die Merkmale des Anspruchs 1 gelöst.

Wenn man die optischen Begrenzungselemente innerhalb der Vakuumkammer anbringt, werden sie allseitig vom äußeren Luftdruck beeinflußt, wodurch sich keine Längenänderung der evakuierbaren Wegstrecke des Meßstrahls ergibt. Es wird eine Entkoppelung der Begrenzungselemente von der Vakuumkammer erreicht.

Vorteilhafte Ausgestaltungen sind in den Unteransprüchen angegeben.

Nachfolgend wird die Erfindung anhand der in der Zeichnung dargestellten Ausführungsbeispiele erläutert.

Es zeigt
- Figur 1: eine schematische Darstellung eines Laserinterferometer-Refraktometers,
- Figur 2: eine Variante des Aufbaus des Laserinterferomter-Refraktometers.

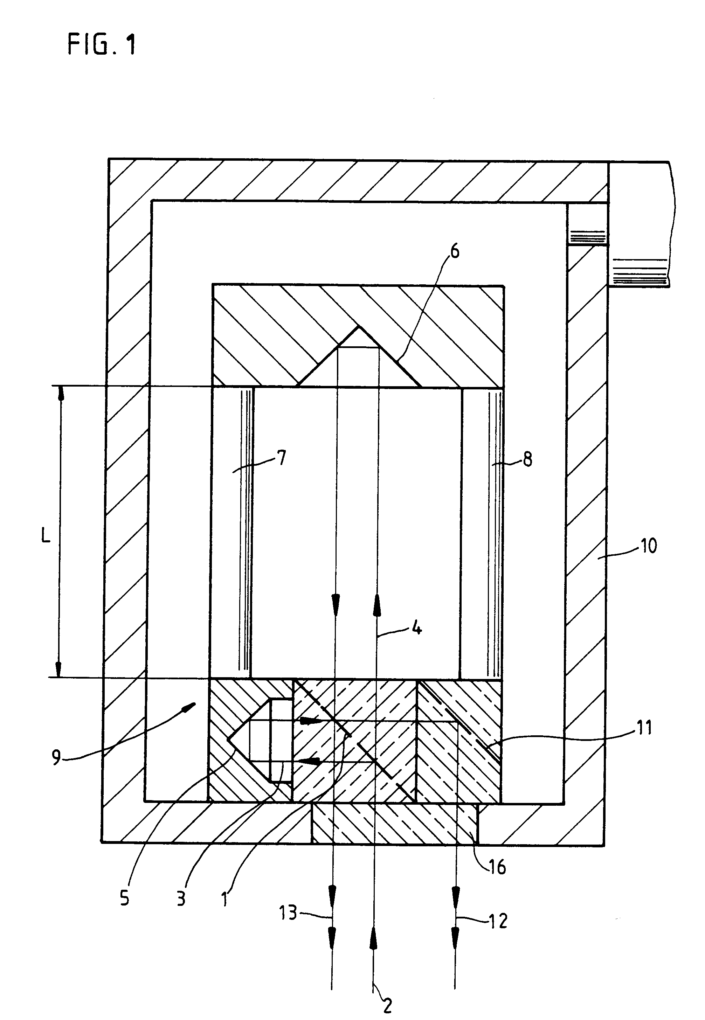

Das in Figur 1 dargestellte Laserinterferometer-Refraktometer besteht aus einem Strahlteiler 1, der einen Lichtstrahl 2 eines nicht gezeigten Lasers in einen Referenzstrahl 3 und einen Meßstrahl 4 aufspaltet. Der Referenzstrahl 3 gelangt zu einem Referenzreflektor 5, der ein Tripelspiegel ist, wird dort umgelenkt und gelangt wiederum zu dem Strahlteiler 1. Zur Umlenkung des Meßstrahls 4 ist ein Meßreflektor 6 in einem fest vorgegebenen Abstand zum Strahlteiler 1 angeordnet. Der Abstand zwischen dem Strahlteiler 1 und dem Meßreflektor 6 ist durch zwei Verbindungsstücke 7 und 8 festgelegt. Der Strahlteiler 1 und der Referenzreflektor 5 bilden mit dem Meßreflektor 6 eine Baugruppe 9, deren Bausteine eine starre Zuordnung zueinander aufweisen.

Diese Baugruppe 9 ist so angeordnet, daß die evakuierbare Wegstrecke des Meßstrahls 4 vom äußeren Luftdruck unabhängig ist. Dies wird erreicht, indem die Baugruppe 9 innerhalb einer Vakuumkammer 10 angeordnet ist und der Strahlteiler 1 sowie der Referenzreflektor 5 mit der Vakuumkammer 10 fest verbunden ist, die Verbindungsstücke 7 und 8 sowie der Meßreflektor 6 aber keine weitere starre Verbindung zu der Vakuumkammer 10 aufweisen. Sollte aufgrund von äußeren Drücken eine Verschiebung der Wände der Vakuumkammer 10 erfolgen, so wird diese Verschiebung auf die gesamte Baugruppe 9 übertragen, ohne daß sich die Länge L ändert.

Die evakuierbare Wegstrecke des Meßstrahls 4 wird bei der gezeigten Ausführungsform durch den Strahlteiler 1 und den Meßreflektor 6 begrenzt, in nicht gezeigter Weise können auch andere optische Begrenzungselemente eingesetzt werden. Die Baugruppe 9 enthält im gezeigten Beispiel einen Umlenkspiegel 11, der einen Teilstrahl 12 des Meßstrahls 4 und des Referenzstrahls 3 zu einem nicht gezeigten Empfänger leitet. Ein weiterer Teilstrahl 13 wird zu einem weiteren Empfänger geleitet.

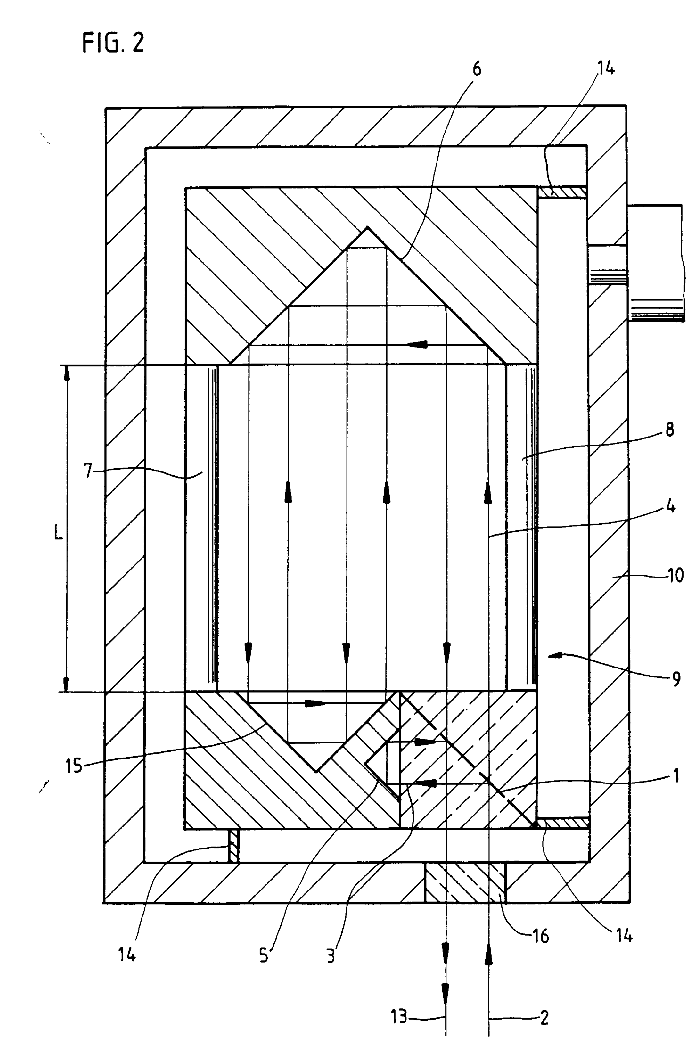

In Figur 2 ist eine besonders vorteilhafte Variante des Laserinterferometer-Refraktometers nach der Erfindung gezeigt. Gleichwirkende Teile sind in der Figur 1 und in der Figur 2 mit den gleichen Bezugszeichen versehen. Wie in der Figur 1, so sind der Strahlteiler 1, der Referenzreflektor 5, die Verbindungsstücke 7, 8 sowie der Meßreflektor 6 innerhalb der Vakuumkammer 10 angeordnet. Die Baugruppe 9 ist allseitig von den Innenwänden der Vakuumkammer 10 beabstandet. Sie ist innerhalb der Vakuumkammer 10 statisch bestimmt befestigt, d. h., daß sie sich bei Auftreten von äußeren Kräften zwar verschieben kann, aber die Lage der einzelnen Bausteine der Baugruppe 9 zueinander aufrechterhalten bleibt. Dies wird durch die Befestigungselemente in Form von drei Blattfedern 14 erreicht. Diese drei Blattfedern 14 lagern die Baugruppe 9 relativ zu der Vakuumkammer 10. Zur Befestigung der Baugruppe 9 können aber auch andere Befestigungselemente zur Anwendung kommen, so beispielsweise Führungen verschiedenster Art, Stäbe mit Schwachstellen oder Drähte. Wichtig ist bei allen Befestigungsarten, daß bei Änderungen des äußeren Luftdruckes die Bewegung der Wände der Vakuumkammer 10 keine Änderung der Wegstrecke des evakuierbaren Meßstrahls 4 verursacht.

In der Baugruppe 9 ist ein weiterer Meßreflektor 15 integriert, durch den eine Faltung des Meßstrahls 4 erfolgt. Der Abstand der beiden Meßreflektoren 6 und 15 wird ebenfalls durch die Verbindungsstücke 7, 8 bestimmt. Durch die Anordnung von mehreren Meßreflektoren 6 und 15 durchläuft der Meßstrahl mehr als zwei mal die Meßstrecke, wodurch man eine hohe Auflösung bei geringer Baulänge erreicht.

In allen Fällen sind die Verbindungsstücke 7, 8 vorzugsweise aus einem Material mit geringer thermischer Ausdehnung, es kann aber auch ein Material zum Einsatz kommen, dessen Ausdehnungskoeffizient mit kompensiert werden soll.

Weiterhin ist es auch möglich, daß der Referenzreflektor 5 außerhalb der Vakuumkammer 10 angeordnet ist. Die Baugruppe 9 besteht dann nur aus dem Strahlteiler 1, den Verbindungstücken 7, 8 sowie zumindest einen Meßreflektor 6. Wie bereits erwähnt, können anstelle des Strahlteilers 1 und des Meßreflektors 6 auch andere optische Begrenzungselemente Verwendung finden.

In den gezeigten Beispielen ist die gesamte Wegstrecke des Meßstrahls 4 evakuierbar, es ist aber auch möglich, daß nur ein Teil dieser Wegstrecke innerhalb der Vakuumkammer 10 verläuft. Hierzu ist der Strahlteiler 1 und der Referenzreflektor 5 außerhalb der Vakuumkammer 10 angeordnet, so daß der Strahlteiler 1 zwar weiterhin den Meßstrahl 4 erzeugt, aber nicht mehr das optische Begrenzungselement der evakuierbaren Wegstrecke ist. Die Aufgabe des optischen Begrenzungselementes übernimmt in diesem Fall ein in den Figuren 1 und 2 gezeigtes Glasfenster 16.

## Patentansprüche

1. Laserinterferometer-Refraktometer mit einem Baustein zur Bildung eines Meßstrahls und mit einem Meßreflektor, wobei eine Vakuumkammer vorgesehen ist, mit der zumindest eine Teilstrecke des Meßstrahls evakuierbar ist und die evakuierbare Wegstrecke des Meßstrahls durch optische Begrenzungselemente begrenzt ist, deren Abstand durch zumindest ein Verbindungsstück festgelegt ist, dadurch gekennzeichnet, daß das zumindest eine Begrenzungselement (6) auf einer Seite der evakuierbaren Wegstrecke des Meßstrahls (4) vollständig innerhalb der Vakuumkammer (10) angeordnet ist und daß es von den Innenwänden der Vakuumkammer (10) beabstandet ist.

2. Laserinterferometer-Refraktometer nach Anspruch 1, dadurch gekennzeichnet, daß das zumindest eine Verbindungsstück (7, 8) innerhalb der Vakuumkammer (10) angeordnet ist.

3. Laserinterferometer-Refraktometer nach Anspruch 1 oder 2, dadurch gekennzeichnet, daß an einem Ende der evakuierbaren Wegstrecke des Meßstrahls (4) ein Strahlteiler (1) und am anderen Ende der Meßreflektor (6) als optische Begrenzungselemente angeordnet sind.

4. Laserinterferometer-Refraktometer nach Anspruch 3, dadurch gekennzeichnet, daß der Strahlteiler (1) und der Meßreflektor (6) über das zumindest eine Verbindungsstück (7, 8) starr miteinander verbunden sind und eine Baugruppe (9) bilden.

5. Laserinterferometer-Refraktometer nach Anspruch 4, dadurch gekennzeichnet, daß die Baugruppe (9) zumindest einen weiteren Meßreflektor (15) zur Umlenkung des Meßstrahls (4) aufweist.

6. Laserinterferometer-Refraktometer nach Anspruch 4 oder 5, dadurch gekennzeichnet, daß die Baugruppe (9) einen Referenzreflektor (5) enthält, der in einem festen Abstand zum Strahlteiler (1) angeordnet ist.

7. Laserinterferometer-Refraktometer nach einem der Ansprüche 4, 5 oder 6, dadurch gekennzeichnet, daß der Strahlteiler (1) oder die Halterung dieses Strahlteilers (1) starr mit der Vakuumkammer (10) gekoppelt ist und das zumindest eine Verbindungsstück (7, 8) sowie der Meßreflektor (6) von den Innenwänden der Vakuumkammer (10) beabstandet angeordnet ist.

8. Laserinterferometer-Refraktometer nach einem der Ansprüche 4, 5 oder 6, dadurch gekennzeichnet, daß die gesamte Baugruppe (9) innerhalb der Vakuumkammer (10) angeordnet ist und zwischen der Baugruppe (9) und der Vakuumkammer (10) Befestigungsmittel (14) vorgesehen sind.

9. Laserinterferometer - Refraktometer nach Anspruch 8, dadurch gekennzeichnet, daß die Befestigungsmittel als Blattfedern (14) ausgebildet sind.

## Claims

1. Laser interferometer-refractometer with a component for forming a measuring bear and with a measuring reflector, a vacuum chamber being provided by means of which at least a partial length of the measuring beam is evacuable and the evacuable path length of the measuring beam being defined by optical defining elements whose distance apart is fixed by at least one connecting piece, characterised in that at least one defining element (6) is arranged completely inside the vacuum chamber (10) on one side of the evacuable path length of the measuring beam (4) and is spaced from the inner walls of the vacuum chamber (10).

2. Laser interferometer-refractometer according to claim 1, characterised in that at least one connecting piece (7, 8) is arranged inside the vacuum chamber (10).

3. Laser interferometer-refractometer according to claim 1 or 2, characterised in that a beam splitter (1) is arranged at one end of the evacuable path length of the measuring beam (4) and the measuring reflector (6) is arranged at the other end as optical defining elements.

4. Laser interferometer-refractometer according to claim 3, characterised in that the beam splitter (1) and the measuring reflector (6) are connected rigidly to one another through the medium of the at least one connecting piece (7, 8) and form an assembly (9).

5. Laser interferometer-refractometer according to claim 4, characterised in that the assembly (9) has at least one more measuring reflector (15) for deflecting the measuring beam (4).

6. Laser interferometer-refractometer according to claim 4 or 5, characterised in that the assembly (9) includes a reference reflector (5) which is arranged at a fixed distance from the beam splitter (1).

7. Laser interferometer-refractometer according to any one of claims 4, 5 and 6, characterised in that the beam splitter (1) or the mounting of the beam splitter (1) is rigidly coupled to the vacuum chamber (10) and the at least one connecting piece (7, 8) and also the measuring reflector (6) are arranged spaced from the inner walls of the vacuum chamber (10).

8. Laser interferometer-refractometer according to any one of claims 4, 5 and 6, characterised in that the entire assembly (9) is arranged inside the vacuum chamber (10) and attachment means (14) are provided between the assembly (9) and the vacuum chamber (10).

9. Laser interferometer-refractometer according to claim 8, characterised in that the attachment means are in the form of leaf springs (14).

## Revendications

1. Réfractomètre-interféromètre à laser comportant un organe de génération d'un rayon de mesure et un réflecteur de mesure, une chambre à vide permettant de créer le vide sur une partie au moins du trajet du rayon de mesure étant prévue, et la partie du trajet du rayon de mesure dans laquelle règne le vide étant délimitée par des éléments optiques de limitation dont la distance est déterminée par au moins ue pièce de liaison, caractérisé par le fait que l'élément de limitation (6), au nombre d'au moins un, d'un côté du trajet dans le vide du rayon de mesure (4), est intégralement situé à l'intérieur de la chambre à vide (10) et que ledit élément de limitation est disposé à distance des parois internes de la chambre à vide (10).

2. Réfractomètre-interféromètre à laser selon la revendication 1, caractérisé par le fait que la pièce de liaison (7, 8) au nombre d'au mois une est située à l'intérieur de la chambre à vide (10)

3. Réfractomètre-interféromètre à laser selon la revendication 1 ou 2, caractérisé par le fait qu'un diviseur de rayon (1) est disposé à une extrémité du trajet dans le vide du rayon de mesure (4) et que le réflecteur de mesure (6) servant d'élément optique de limitation est disposé à l'autre extrémité dudit trajet de mesure.

4. Réfractomètre-interféromètre à laser selon la revendication 3, caractérisé par le fait que diviseur de rayon (1) et le réflecteur de mesure (6) sont reliés rigidement entre eux par la pièce de liaison (7, 8) au nombre d'au moins une et forment un ensemble (9).

5. Réfractomètre-interféromètre à laser selon la revendication 4, caractérisé par le fait que l'ensemble (9) comporte au moins un réflecteur de mesure (15) supplémentaire destiné à dévier le rayon de mesure (4).

6. Réfractomètre-interféromètre à laser selon la revendication 4 ou 5, caractérisé par le fait que l'ensemble (9) contient un réflecteur de référence (5) qui est disposé à distance fixe par rapport au diviseur de rayon (1).

7. Réfractomètre-interféromètre à laser selon l'une des revendications 4, 5 ou 6, caractérisé par le fait que le diviseur de rayon (1) ou le support dudit diviseur de rayon (1) est couplé rigidement à la chambre à vide (10) et la pièce de liaison (7, 8) au nombre d'au moins une ainsi que le réflecteur de mesure (6) sont disposés à distance des parois internes de la chambre à vide (10).

8. Réfractomètre-interféromètre à laser selon l'une des revendications 4, 5 ou 6, caractérisé par le fait l'ensemble (9) est intégralement placé à l'intérieur de la chambre à vide (10) et que des moyens de fixation (14) sont prévus entre l'ensemble (9) et la chambre à vide (10).

9. Réfractomètre-interféromètre à laser selon la revendication 8, caractérisé par le fait que les moyens de fixation sont agencés sous forme de ressorts à lame (14).
